# EUROPÄISCHE PATENTSCHRIFT

(11) **EP 2 628 421 B1**
(45) Veröffentlichungstag und Bekanntmachung des Hinweises auf die Patenterteilung: **10.12.2014**
(21) Anmeldenummer: 13150578.6
(22) Anmeldetag: 09.01.2013
(51) Int. Cl.: A47J 31/44

(54) **Vorrichtung zum Zubereiten eines Milch enthaltenden Getränkes mit Milchleererkennung und entsprechendes Verfahren**
Device for preparing a beverage containing milk with emptiness detection and method for same
Dispositif de préparation d'une boisson contenant du lait avec détection d'absence de lait et procédé correspondant

(30) Priorität: 16.02.2012 DE 102012002946
(43) Veröffentlichungstag der Anmeldung: 21.08.2013
(73) Patentinhaber: WMF AG, 73312 Geislingen/Steige (DE)
(72) Erfinder: Wegis, Christoph, 89073 Ulm (DE); Göltenboth, Frank, 89134 Blaustein (DE)
(74) Vertreter: Pfenning, Meinig & Partner GbR

(56) Entgegenhaltungen:
- US-A1- 2001 048 958

## Beschreibung

Die vorliegende Erfindung bezieht sich auf eine Vorrichtung zum Zubereiten eines Milch enthaltenden Getränkes (insbesondere auf eine elektrisch betriebene Kaffeemaschine oder einen Kaffeevollautomaten zum Zubereiten eines Milch enthaltenden Kaffeegetränkes), die dazu fähig ist, das Fehlen von Milch in der Milchbevorratung (beispielsweise in einem externen Milchgefäß) zu erkennen, und auf ein entsprechendes Verfahren. Dabei ist es auch denkbar, die erfindungsgemäße Vorrichtung zum Zubereiten von anderen Milch enthaltenden Getränken als Kaffee oder Kaffeespezialitäten, auszubilden (z.B. im Rahmen von elektrischen Teekochern, die dem aufgebrühten Tee automatisch Milch zusetzen).

Wird ein Milch enthaltendes Getränk (nachfolgend alternativ auch als Milch-Kaffeegetränk oder als Kaffee-Milch-Getränk bezeichnet, obwohl es sich hierbei auch um Getränke ohne Kaffeeanteile wie z.B. Tee handeln kann) aus einer Haushaltsmaschine wie z.B. einer elektrischen Kaffeemaschine oder aus einem Haushalts-Kaffeevollautomaten bezogen, so wird die Bevorratung der Milch nicht überwacht. Dadurch kann es passieren, dass ein Kaffee-Milch-Getränk mit zu wenig oder sogar ohne Milch ausgegeben wird.

Besonders ärgerlich für den Bediener ist ein solcher Fall bei einer kostenpflichtigen Getränkeausgabe, z.B. bei Selbstbedienungsautomaten in Gastronomiebetrieben.

Ein Nachteil des Fehlens einer Überwachung der Bevorratung der Milch ist auch, dass bei nahezu leerem Milchbehälter die Milch am Auslauf anfängt zu spritzen. Dadurch kann es zum Verschmutzen des Bedieners und/oder der Maschine kommen.

Aus dem Stand der Technik sind nun Systeme bekannt, die den Milchbehälter wiegen (und damit feststellen, wann der Milchbehälter leer ist). Auch sind Systeme bekannt, bei dem der Füllstand im Vorratsbehälter der Milch über Ultraschall gemessen wird. Letztere Systeme sind jedoch behältergebunden und vergleichsweise aufwendig. Stand der Technik Dokumente sind bspw. die US 2001/048 958, die DE 44 45 436.

Aufgabe der vorliegenden Erfindung ist es somit ausgehend vom Stand der Technik eine Vorrichtung zum Zubereiten eines Milch enthaltenden Getränkes (sowie ein entsprechendes Zubereitungsverfahren) zur Verfügung zu stellen, mit der es möglich ist, ein Fehlen bzw. ein Aufbrauchen der Milch rechtzeitig zu erkennen (sog. Milchleererkennung) und mit der die Milchleererkennung auf einfache, zuverlässige und preisgünstige Art und Weise möglich ist.

Diese Aufgabe wird durch eine Vorrichtung gemäß Anspruch 1 sowie durch ein Verfahren gemäß Anspruch 13 gelöst. Vorteilhafte Ausgestaltungsformen der/des erfindungsgemäßen Vorrichtung/Verfahrens lassen sich den abhängigen Ansprüchen entnehmen.

Nachfolgend wird die vorliegende Erfindung zunächst allgemein, dann anhand von Ausführungsbeispielen beschrieben. Die bei den einzelnen Ausführungsbeispielen in Kombination miteinander gezeigten Einzelmerkmale einer erfindungsgemäßen Vorrichtung müssen dabei im Rahmen der Erfindung nicht genau in den gezeigten Merkmalskombinationen verwirklicht sein: Die Erfindung kann auch auf andere Art und Weise im Rahmen des durch die Patentansprüche vorgegebenen Schutzumfangs verwirklicht werden. Insbesondere können einzelne der in den Ausführungsbeispielen gezeigten Merkmale auch weggelassen werden oder auf andere Art und Weise miteinander kombiniert werden.

Im Rahmen der vorliegenden Erfindung wird unter einer Kaffeemaschine eine bevorzugt elektrisch betriebene Maschine (insbesondere ein Kaffeevollautomat) verstanden, mit welcher dem aufzubrühenden Kaffee Milch in jedweder Form (z.B. aufgeschäumt oder auch z.B. lediglich angewärmt) zusetzbar ist. Die Milch kann dabei vor dem Aufbrühen des Kaffees zugesetzt werden (indem die Milch in ein Sammelgefäß eingeleitet wird, in das dann anschließend auch der gebrühte Kaffee eingeleitet wird), die Milch kann dem Kaffee jedoch auch nach dem Aufbrühen desselben zugesetzt werden (z.B. durch Zuleiten von lediglich angewärmter Milch in ein den aufgebrühten Kaffee bereits enthaltendes Sammelgefäß).

Bevorzugt handelt es sich bei einer erfindungsgemäßen Vorrichtung jedoch um einen Kaffeevollautomaten samt Milchaufschäumeinheit, bei dem die Milchleererkennung wie nachfolgend noch im Detail beschrieben verwirklicht ist. Entsprechende Kaffeevollautomaten und Milchaufschäumeinheiten sind dem Fachmann bekannt (siehe beispielsweise DE 4445436 C2).

Im Rahmen der vorliegenden Erfindung wird unter dem Fördern von Milch sowohl ein aktives Fördern der Milch (durch einen Förderkanal, siehe nachfolgend) verstanden, was beispielsweise mithilfe einer Pumpe oder des nachfolgend noch beschriebenen Venturiprinzips realisiert werden kann. Ebenso wird jedoch unter einem Fördern von Milch auch ein passiver Transport von Milch (durch den Förderkanal) verstanden, beispielsweise ein schwerkraftbedingtes Hindurchlaufen von Milch durch einen aus einem oberhalb einer erfindungsgemäßen Vorrichtung angeordneten (oder als Teil dieser Vorrichtung in einem oben liegenden Bereich derselben ausgebildeten) Milchgefäß ausmündenden Förderkanal. Unter dem Fördern von Milch durch die erfindungsgemäße Fördereinrichtung (siehe nachfolgend) ist somit jedweder Transport von Milch durch den Förderkanal dieser Einrichtung zu verstehen.

Eine erfindungsgemäße Vorrichtung (insbesondere: Kaffeevollautomat) umfasst eine Fördereinrichtung, die zum Fördern und Ausleiten von Milch ausgebildet ist und dazu einen Förderkanal für Milch und einen stromabwärts dieses Förderkanals ausgebildeten Auslass zum Ausleiten der Milch aufweist. Im einfachsten Fall handelt es sich bei der Fördereinrichtung um eine einfache Milchleitung (z.B. Schlauch), mit der die Milch (z.B. schwerkraftbedingt aus einem oberhalb der Milchleitung angeordneten externen Milchgefäß) über eines ihrer Enden (das den Auslass bildet) in eine externes Sammelgefäß abgeleitet werden kann.

Erfindungsgemäß ist im und/oder am Förderkanal eine Detektionseinheit ausgebildet, die einen Sensor umfasst. Die Detektionseinheit bzw. ihr Sensor ist so ausgebildet, dass mit ihr/ihm eine Änderung des Füllstands und/oder des Strömungszustandes (also z.B. das Vorhandensein oder die Abwesenheit von Milch) innerhalb des Förderkanals erfasst werden kann. Bevorzugt wird dabei der Übergang von einem Zustand des Förderns von Milch durch den Förderkanal hin zu einem Zustand des Förderns von Dampf und/oder von Luft erfasst: die Detektionseinheit stellt also z.B. fest, wenn die Milchbevorratung in einem den Förderkanal versorgenden externen Milchgefäß erschöpft ist und daher durch den Förderkanal nicht mehr Milch, sondern - je nach Ausbildung der erfindungsgemäßen Vorrichtung - nur noch Luft aus der Umgebung und/oder heißer Dampf transportiert wird oder angesaugt wird. Eine Änderung des Füll- und/oder Strömungszustandes im Förderkanal kann jedoch auch erst dann erfasst bzw. festgestellt werden, wenn über eine vorbestimmte Zeit (nach dem Aufbrauchen der Milch im Milchgefäß) Luft und/oder Dampf über den Förderkanal gefördert worden ist. Die vorbestimmte Zeit kann dabei beispielsweise im Bereich von 0,5 bis 3 Sekunden eingestellt werden.

Wird erfindungsgemäß eine Änderung des Füll- und/oder Strömungszustandes im Förderkanal erfasst, so kann wie nachfolgend noch beschrieben eine automatische Reaktion der Vorrichtung (z.B. das Beenden des Förderns von Fluid durch den Förderkanal und/oder das Auslösen eines Warnsignals) erfolgen.

Vorteilhafterweise wird die Änderung des Füll- und/oder Strömungszustandes von Fluid im Förderkanal (nachfolgend vereinfacht auch als "Änderung des Zustands" bezeichnet) durch die Detektionseinheit berührungslos erfasst. Hierunter wird erfindungsgemäß verstanden, dass die Detektionseinheit so ausgebildet ist, dass keine Bauteile derselben zum Erfassen der Änderung des Zustands in Kontakt mit Milch treten müssen bzw. in das Innere des Förderkanals eingreifen müssen.

In einer ersten vorteilhaften Ausgestaltungsvariante der Detektionseinheit weist der Förderkanal einen flexiblen Abschnitt (flexiblen Schlauchabschnitt) auf. Die Detektionseinheit ist dann mit einem Sensor ausgebildet, der so positioniert ist, dass mit ihm eine durch eine Änderung der Verhältnisse im Kanalinneren bewirkte Lage-, Ausdehnungs-, Druck- und/oder Formänderung des/am flexiblen Abschnitt(s) gemessen werden kann, um die Änderung des Zustands im Förderkanal festzustellen. Bei einem solchen elektromechanischen Sensor kann es sich beispielsweise um einen piezoelektrischen Sensor oder einen Hall-Sensor handeln (deren Aufbau dem Fachmann bekannt ist), der im Bereich des Förderkanals bzw. des flexiblen Abschnitts desselben außerhalb dieses Kanals bzw. Abschnitts angeordnet ist. Auch ist der Einsatz einer Wägezelle (mit Dehnungsmessstreifen) möglich: In dieser Variante wird der Schlauch leicht klemmend zwischen die Wägezelle und ein Widerlager (z.B. Wandabschnitt) gelegt. Über die Kraft (mit der der Schlauch gegen die Wägezelle drückt) kann erkannt werden, ob Milch oder Luft gefördert wird (oder auch, ob überhaupt ein Schlauch eingelegt ist).

In einer weiteren vorteilhaften Variante umfasst die Detektionseinheit einen kapazitiven Sensor, der ebenfalls außerhalb (nicht notwendigerweise flexiblen) Förderkanals und im Bereich desselben angeordnet ist. Besonders bevorzugt umfasst der kapazitive Sensor zwei oder drei (ggf. auch mehr als drei) Elektroden, zwischen denen ein Abschnitt des Förderkanals angeordnet ist. In jedem Fall ist der Sensor so positioniert, dass mit ihm eine Änderung der Kapazität des Förderkanals bzw. eines Abschnitts desselben, die durch eine Änderung der Dielektrizitätskonstanten beim Übergang von Flüssigkeit (Milch) zu Gas (Dampf und/oder Luft) innerhalb des Förderkanals verursacht wird, gemessen werden kann, um die Änderung des Zustands im Förderkanal zu erfassen (und ggf. eine entsprechende Reaktion der erfindungsgemäßen Vorrichtung einzuleiten). Das Messprinzip eines kapazitiven Sensors ist dem Fachmann grundsätzlich bekannt.

Schließlich kann der Förderkanal (oder ein Abschnitt desselben) auch transparent oder teilweise transparent ausgebildet werden. Die Detektionseinheit umfasst dann einen außerhalb des Förderkanals angeordneten optischen Sensor, der so positioniert wird, dass mit ihm eine durch eine Änderung der Verhältnisse im Förderkanal bewirkte Änderung in der Transmission, der Streuung und/oder der Reflexion von Licht durch den, innerhalb des und/oder an dem Förderkanal(s) oder Abschnitt desselben gemessen werden kann, um die Änderung des Zustands im Förderkanal zu erfassen. Der optische Sensor kann beispielsweise als Durchlichtschranke, Gabellichtschranke oder Reflexlichtschranke ausgebildet sein (deren Aufbau dem Fachmann grundsätzlich bekannt ist). Zum Emittieren von Licht können Leuchtdioden vorgesehen sein. Zum Nachweis von transmittierten, reflektierten und/oder gestreuten Lichtanteilen Fotodioden. Dabei ist es insbesondere auch möglich, mit optischen Sensoren, Leuchtdioden und/oder Fotodioden im Infrarotlicht-Bereich zu arbeiten, um Fremdlichteinflüsse möglichst zu minimieren. Sensoren im Infrarotbereich haben dabei den Vorteil, weniger anfällig gegenüber Trübungen z.B. aufgrund von Dampf und/oder Verunreinigungen zu sein.

Sind die vorstehend beschriebenen Varianten der Detektionseinheit bzw. des Sensors aufgrund ihrer berührungslosen Arbeitsweise (die dazu führt, dass keine Sensorteile mit Milch in Berührung kommen, also Sensorteile nicht ständig nach dem Kontakt mit Milch gereinigt werden müssen) im Rahmen der vorliegenden Erfindung besonders vorteilhaft einsetzbar, so ist jedoch auch eine berührungsbehaftete Detektion der Änderung des Zustands im Förderkanal möglich: So kann die Detektionseinheit auch zwei zumindest abschnittsweise in das Innere des Förderkanals ragende Elektroden umfassen, an die eine elektrische Spannung angelegt werden kann. Nach Anlegen der Spannung fließt zwischen den beiden Elektroden ein elektrischer Strom. Die Höhe des fließenden Stroms ist von der elektrischen Leitfähigkeit des Fluids, also vom Füll- und/oder Strömungszustand im Förderkanal abhängig (z.B. beim Fördern von Milch fließt ein höherer Strom, als bei einem beinahe leeren Milchvorratsbehälter, aus dem nur noch luftvermischte Milchanteile gefördert werden). Anhand des gemessenen Stromes kann somit eine Änderung des Zustands im Förderkanal erfasst werden.

In einer weiteren, nicht berührungslos arbeitenden Variante kann am Förderkanal ein Heizelement angeordnet sein. Dieses Heizelement ist so positioniert, das mit ihm das durch den Förderkanal strömende Medium erhitzt werden kann. Stromabwärts des Heizelementes ist bei dieser Variante im Förderkanal ein Temperaturfühler angeordnet, welcher von dem erhitzten, durch den Förderkanal strömenden Medium umströmt wird. Da Luft (gasförmig) einerseits und Milch (flüssig) andererseits unterschiedliche Wärmekapazitäten und Wärmeleitfähigkeiten haben, kann mithilfe des Temperaturfühlers (der einen Teil des erfindungsgemäβen Sensors darstellt) ein Temperatursprung am Sensor festgestellt werden, wenn Luft anstatt von Milch angesaugt wird.

Vorteilhafterweise ist die erfindungsgemäße Vorrichtung dazu ausgebildet, bei und/oder nach dem Erfassen einer Änderung des Zustands der Milch im Förderkanal automatisch eine Reaktion einzuleiten: So kann das Fördern eines Fluids (also z.B. von Milchresten, Dampf und/oder Luft) durch den Förderkanal eingestellt bzw. abgeschaltet werden, wenn eine Änderung des Zustands im Förderkanal erfasst worden ist. Insbesondere kann bei erfindungsgemäßen Vorrichtungen, die Milch über den Förderkanal ansaugen, das Ansaugen der Milch beendet werden, wenn mit der Detektionseinheit eine Änderung des Zustands im Strömungskanal festgestellt worden ist.

In einer besonders bevorzugten Variante weist die erfindungsgemäße Vorrichtung hierzu eine Milchaufschäumeinheit zum Aufschäumen von Milch mit heißem Dampf auf, die beim Feststellen einer Änderung des Strömungszustands im Förderkanal abgeschaltet wird. Die Milchaufschäumeinheit umfasst einen Mischbereich, in dem die geförderte Milch mit heißem Dampf aufgeschäumt wird, und eine in diesen Mischbereich einmündende Dampfzuleitung zum Zuführen von heißem Dampf (ggf. vermischt mit Luft). Der Mischbereich kann dabei in den Förderkanal integriert sein oder zwischen zwei Teilabschnitte des Förderkanals geschaltet sein.

Erfindungsgemäß wird somit die Zufuhr von heißem Dampf in den Mischbereich abgeschaltet (beispielsweise durch Schließen einer in der Dampfzuleitung ausgebildeten Verschlusseinheit in Form eines Ventils), wenn mittels der Detektionseinheit bzw. des Sensors derselben eine Änderung des Füll- und/oder Strömungszustandes im Förderkanal aufgrund des Leersaugens des Milchgefäßes festgestellt wird.

Alternativ zu den vorbeschriebenen automatischen Reaktionen (oder auch in Kombination damit) kann auch ein Signalgeber, der ein zusätzliches Signal erzeugt, vorgesehen sein (z.B. ein akustischer Signalgeber, ein optischer Signalgeber mit einer Anzeige am Gerät, z.B. Warnlicht, Displaymeldung, ..., oder auch ein haptischer Signalgeber, z.B. in Form eines Vibrationsalarms), der aktiviert wird, wenn mittels der Detektionseinheit bzw. deren Sensor die Änderung des Zustands im Förderkanal festgestellt worden ist.

Vorteilhafterweise ist die erfindungsgemäße Fördereinrichtung zum Fördern und Ausleiten der Milch so ausgebildet, dass Milch aus einem externen Milchgefäß mithilfe des Venturiprinzips in den Förderkanal angesaugt wird, anschließend im Mischbereich (Engstelle der Düse) mit heißem Dampf (oder einer Mischung aus heißem Dampf und Luft) vermischt wird und schließlich über den Ausfluss in ein externes Sammelgefäß (z.B. Tasse) abgeleitet wird.

Zum Erfassen einer Änderung des Zustands im Förderkanal kann letzterer (oder ein Abschnitt desselben) in den Sensor der Detektionseinheit und/oder zwischen Teile dieses Sensors einklemmbar ausgebildet sein. Ebenso ist es möglich, den Förderkanal oder einen Abschnitt desselben so auszubilden, dass er zwischen den Sensor und ein Gegenstück (beispielsweise ein Wandabschnitt des Gehäuses der erfindungsgemäßen Vorrichtung oder auch eine Halterung, die zum Halten des Sensors und/oder des Förderkanals ausgebildet ist) eingeklemmt werden kann.

Erfindungsgemäß erfolgt somit eine Milchleererkennung durch die Detektionseinheit am Förderkanal der Fördereinrichtung z.B. in dem Moment, in dem ein externes Milchgefäß (z.B. Tetrapak mit Milch) über die Fördereinrichtung der erfindungsgemäßen Vorrichtung geleert worden ist. Anschließend kann z.B. ein automatisches Abschalten der weiteren Milchzufuhr (z.B. durch Stoppen der weiteren Dampfzufuhr, wenn die Milch über das Venturiprinzip angesaugt wird) erfolgen.

Eine erfindungsgemäße Vorrichtung (bzw. ein erfindungsgemäßes Verfahren) hat im Vergleich zu den aus dem Stand der Technik bekannten Vorrichtungen bzw. Verfahren eine Reihe von Vorteilen:
- Das Leermeldesystem bzw. die Detektionseinheit der Erfindung erkennt, sobald die Milch im Milchgefäß leer ist bzw. die Milchbevorratung zu Ende geht. Dies kann z.B. über Druckschwankungen im Milchschlauch (oder auf optischem Weg) geschehen, ohne dass Bauteile der erfindungsgemäβen Detektionseinheit bzw. des Sensors derselben ins Innere des Förderkanals bzw. eines entsprechenden Schlauches eindringen müssen. Somit kann ein Kontakt dieser Teile mit Milch und somit ein regelmäßiges Reinigen dieser Teile vermieden werden.
- Die erfindungsgemäße Detektionseinheit samt Sensor kann auf einfache Art und Weise in an sich bekannte Kaffeevollautomaten integriert werden.
- Das Leermeldesystem bzw. die Detektionseinheit ist unempfindlich gegenüber Verschmutzungen, Verfärbungen an Förderkanal bzw. Schlauch, gegenüber Kondenswasser und Luftfeuchtigkeit sowie
   - bei geeigneter Ausbildung - auch gegen Streulicht oder andere äußere Einflüsse.
   - Der Förderkanal bzw. der Milchschlauch lässt sich im Vergleich zu bereits bekannten Vorrichtungen (insbesondere Kaffeevollautomaten) mit identischem Aufwand einbauen, ausbauen und reinigen; das Design der Vorrichtung kann (bis auf die Detektionseinheit) unberührt bleiben.
   - Durch die Detektionseinheit kann nicht nur eine Änderung des Füll- und/oder Strömungszustandes im Förderkanal detektiert werden, sondern sie kann auch so ausgebildet sein, dass zusätzlich die Anwesenheit oder Abwesenheit des Förderkanals überprüft werden kann.
   - Die erfindungsgemäß für die zusätzliche Detektionseinheit notwendigen Komponenten können, sofern gewünscht, einfach und kostengünstig realisiert werden.

Nachfolgend wird die Erfindung anhand von Ausführungsbeispielen beschrieben. Dabei zeigen:
Figur 1 einen erfindungsgemäßen Kaffeevollautomaten, in dem die erfindungsgemäße Milchleererkennung realisiert ist.
Figuren 2a-2d mehrere Beispiele, wie die Detektionseinheit samt ihres Sensors in dem in Figur 1 gezeigten Kaffeevollautomaten ausgebildet sein kann.

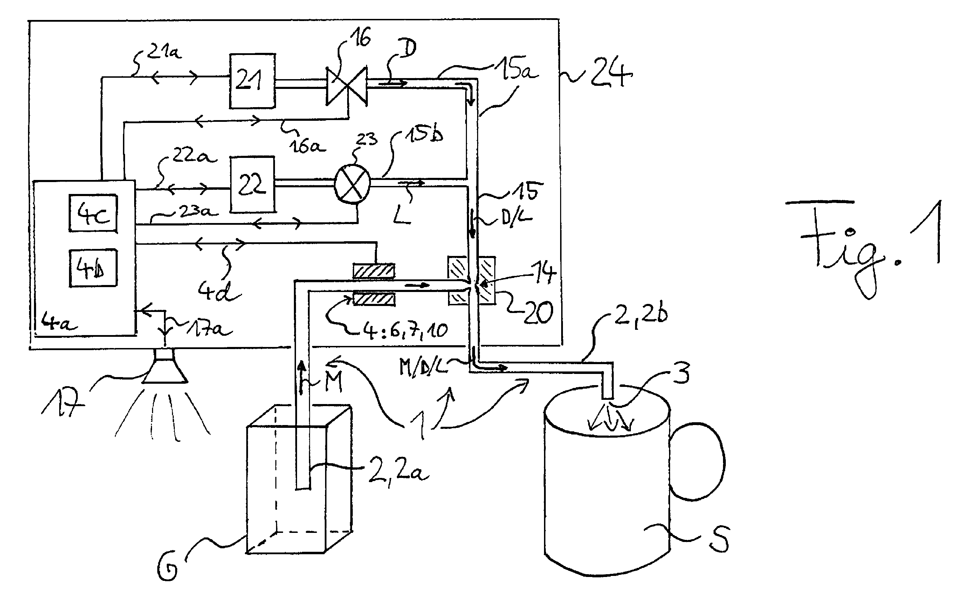

Figur 1 skizziert einen erfindungsgemäßen Kaffeevollautomaten mit Milchleererkennung, dessen Gehäuse 24 hier lediglich angedeutet ist. Der Kaffeevollautomat umfasst eine Fördereinrichtung 1, die einen Förderkanal 2, in dem eine Venturidüse 20 integriert ist, aufweist. Ein erster Teilabschnitt 2a des Förderkanals 2 ist als flexibler Schlauch ausgebildet, dessen eines Ende im Inneren des Gehäuses 24 in das Abnahmerohr der Venturidüse 20 mündet (hier nicht im Detail gezeigt). Das andere Ende dieses Teilabschnitts 2a endet außerhalb des Gehäuses 24 und weist außerhalb des Gehäuses 24 eine Länge auf, die ein Eintauchen dieses Endes in ein externes Milchgefäß (Tetrapak G) bis auf den Boden desselben ermöglicht. Der zweite, stromabwärtige Teilabschnitt 2b des Förderkanals 2 ist als starrer Rohrabschnitt ausgebildet. Ein Ende dieses starren Rohrabschnitts bildet den Auslass der Venturidüse 20, das andere Ende dieses starren Rohrabschnitts einen Auslass 3 zum Ausleiten der durch die Venturidüse angesaugten Milch M (siehe nachfolgend) in das externe Sammelgefäß S in Form eines Bechers. Hierzu ist das erstgenannte Ende des zweiten Teilabschnitts 2b ebenfalls innerhalb des Gehäuses 24 angeordnet und das letztgenannte Ende dieses Teilabschnitts 2b endet außerhalb des Gehäuses 24 und ist so angeordnet, dass ein Ausleiten in das Sammelgefäß S möglich ist.

Der erfindungsgemäße Kaffeevollautomat weist eine Dampfzuleitung 15 auf. Diese mündet an ihrem stromabwärtigen Ende in die Venturidüse 20. Dieses Ende der Dampfzuleitung 15 bildet somit den Einlass der Venturidüse 20. Die der Düse 20 zugewandten Enden der Dampfzuleitung 15 (Einlass) und des zweiten Teilabschnittes 2b (Auslass) sind hierzu als zwei gegeneinander gerichtete Konen ausgebildet, die an der Stelle ihres geringsten Durchmessers vereinigt sind. An dieser Stelle bzw. dem Querschnittsverengungsbereich der Venturidüse mündet das im Gehäuse 24 gelegene Ende des ersten Teilabschnitts 2a als Abnahmerohr in die Venturidüse ein. Der Querschnittsverengungsbereich bildet somit einen Mischbereich 14 zum Aufschäumen der Milch M aus dem Teilabschnitt 2a mit heißem Dampf D bzw. einem Gemisch D/L aus heißem Dampf D und Luft L (siehe nachfolgend) aus der Zuleitung 15.

In stromaufwärtiger Richtung, d.h. am der Venturidüse 20 angewandten Ende verzweigt sich die Dampfzuleitung 15 in einen Dampfleitungsabschnitt 15a und in einen Luftleitungsabschnitt 15b. Im Dampfleitungsabschnitt 15a sind (in Strömungsrichtung des Dampfes D, also in Richtung zu dem der Venturidüse 20 zugewandten Ende der Dampfzuleitung 15 hin gesehen) ein an sich bekannter Dampferzeuger 21 (z.B. Boiler) und diesem nachfolgend ein Ventil 16 angeordnet. Wird Letzteres verschlossen, so ist eine Dampfzufuhr D über den Dampfleitungsabschnitt 15a unterbunden. Wird das Ventil 16 geöffnet, ist die Dampfzuleitung D ermöglicht. In dem sich an seinem stromabwärtigen Ende mit dem Dampfleitungsabschnitt 15a vereinigenden Luftleitungsabschnitt 15b sind in Strömungsrichtung gesehen eine an sich bekannte Druckluftquelle 22 und dieser in Strömungsrichtung nachfolgend eine auch als Ventil fungierende Luftpumpe 23 angeordnet. Eine geeignete Steuerung 22a, 23a der Druckluftquelle 22 und der motorbetriebenen Luftpumpe 23 ermöglicht somit die Luftzufuhr L über den Luftleitungsabschnitt 15b, sodass im stromabwärtigen Ende der Dampfzuleitung 15 eine Mischung aus Heißdampf D und Luft L vorliegt. Das Mischungsverhältnis von Dampf D und Luft L in dieser Mischung D/L kann durch den Öffnungsgrad des Ventils 16 sowie die Fördermenge der Pumpe 23 pro Zeiteinheit in Abhängigkeit vom gewünschten Getränk eingestellt werden.

Erfindungswesentlich weist der gezeigte Kaffeevollautomat eine Detektionseinheit 4 wie folgt auf, mit der eine Änderung des Strömungszustands der Milch M im Förderkanal 2 bzw. in dessen erstem Teilabschnitt 2a erfasst werden kann: Im Gehäuse 24 ist ein Mikrocontroller 4a vorgesehen, der Speicherelemente 4b und 4c und in diesen abgelegte Steuerprogramme umfasst. Die Steuerprogramme sind so ausgebildet, dass mit ihnen die nachfolgend noch beschriebene Steuerung der einzelnen Elemente des gezeigten Kaffeevollautomaten realisiert ist. Die Detektionseinheit 4 umfasst des weiteren einen am Förderkanal außerhalb desselben ausgebildeten Sensor 6, 7, 10. Dieser ist im Bereich des ersten Teilabschnitts 2a so angeordnet, dass mit ihm die Änderung des Strömungszustands von Milch M im ersten Teilabschnitt 2a, also z.B. ein Übergang des venturibedingten (Unterdruck) Mitreißens von Milch M hin zum Mitreißen von Luft (wenn der Milchvorrat im Tetrapak G erschöpft ist) erfasst werden kann.

Ebenso kann mit diesem Sensor 6, 7, 10 jedoch auch der umgekehrte Übergang erfasst werden, d.h. der Moment, wenn nach Anschluss eines neuen, gefüllten Tetrapaks G das Fördern von Luft wieder in ein Fördern von Milch M übergeht.

Wie nachfolgend noch beschrieben, erfolgt auf Basis des Signals des Sensors 6, 7, 10 mittels des Mikrocontrollers 4a eine Steuerung der Elemente 16, 17, 21, 22 und 23 des Kaffeevollautomaten.

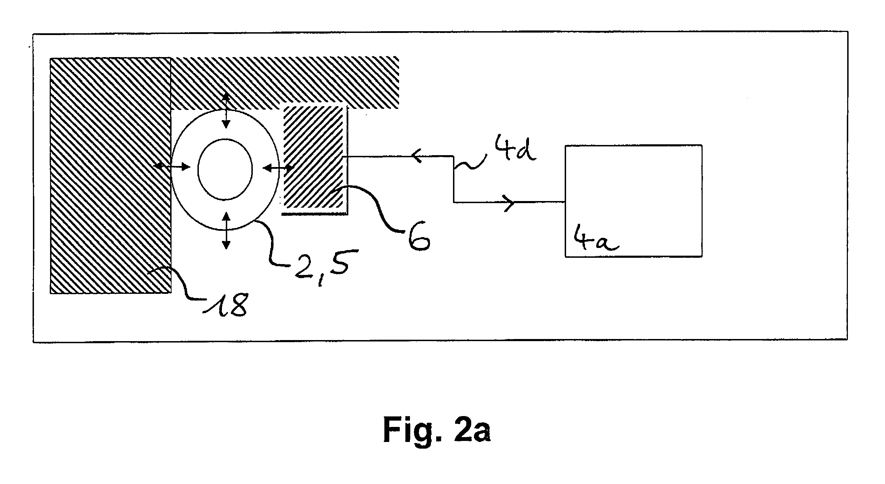

Für die konkrete Gestaltung des berührungslos arbeitenden Sensors 6, 7, 10 siehe die nachfolgende Beschreibung zu den Figuren 2a bis 2c.

Zur Ansteuerung des Sensors 6, 7, 10 sowie zur Übermittlung von Messsignalen des Sensors an den Mikrocontroller 4a ist der Mikrocontroller 4a über eine bidirektionale Datenleitung 4d mit dem Sensor 6, 7, 10 verbunden. Entsprechende bidirektionale Datenleitungen 16a, 21a, 22a und 23a verbinden den Mikrocontroller 4a mit dem Ventil 16, dem Dampferzeuger 21, der Druckluftquelle 22 und der Luftpumpe 23. Über diese Datenleitungen 16a, 21a, 22a und 23a ist somit eine Ansteuerung der Elemente 16, 21, 22 und 23 und eine Funktionskontrolle derselben möglich.

Schließlich ist außen am Gehäuse 24 ein akustischer Signalgeber 17 vorgesehen, der ebenfalls über eine bidirektionale Datenleitung 17a mit dem Mikrocontroller 4a verbunden ist.

Nachfolgend wird die Funktionsweise des erfindungsgemäßen Kaffeevollautomaten beschrieben:
Nach Wahl eines Getränkes durch den Bediener des Kaffeevollautomaten, das aufgeschäumte Milch benötigt, wird das Ventil 16 geöffnet 16a und die Luftpumpe 23 wird in Betrieb gesetzt 23a. Entsprechend strömt die Dampf-Luft-Mischung D/L in den Querschnittsverengungsbereich bzw. den Mischbereich 14 der Venturidüse 20 und reißt gemäß dem bekannten Venturieffekt über das Abnahmerohr der Düse 20 bzw. dem ersten Teilabschnitt 2a Milch M aus dem Milchgefäß G mit.
Das resultierende Gemisch M/D/L aus Milch M, heißem Dampf D und Luft L strömt über den Ausgang der Venturidüse bzw. den zweiten Teilabschnitt 2b und den Auslass 3 in das externe Gefäß S. Anschließend kann eine Zugabe von aufgebrühtem Kaffee (Bauteile hier nicht gezeigt) erfolgen. Während der Milchförderung überprüft der Mikrocontroller 4a auf Basis der übermittelten 4d Messwerte des Sensors 6, 7, 10 dabei laufend, ob noch ein Ansaugen von Milch M aus dem Tetrapak G erfolgt, oder ob der Tetrapak G bereits leer ist und daher aufgrund des Venturieffekts lediglich Schaumreste mit hohem Luftanteil oder Luft über den ersten Teilabschnitt 2a angesaugt wird/werden.

Sobald die Detektionseinheit 4 auf Basis der Sensorsignale feststellt, dass beim Ansaugen über den Teilabschnitt 2a ein Übergang hin von Flüssigkeit zu Gas bzw. Luft stattgefunden hat (siehe nachfolgende Beschreibung zu den Figuren 2a bis 2d) erfolgt mittels des Mikrocontrollers 4a ein Schließen 16a des Ventils 16 sowie ein Beenden 23a der Förderung von Luft L durch die Pumpe 23. Gleichzeitig wird über den Signalgeber 17 ein entsprechendes Hinweissignal ausgegeben 17a.

Nach dem Wechseln des Tetrapaks G durch den Bediener kann mit einer entsprechenden Eingabe über das hier nicht gezeigte Bedienfeld des Kaffeevollautomaten erneute Milchförderbereitschaft signalisiert werden, sodass der Kaffeevollautomat - nach erneuter Getränkewahl - das Ventil 16 erneut öffnen 16a und die Pumpe 23 erneut in Betrieb setzen 23a kann. Hierbei können zwei Förderstufen vorgesehen sein, zwischen denen mithilfe des vom Sensor 6, 7, 10 erfassten Signals 4d umgeschaltet werden kann. Wird zunächst die restliche noch im Schlauch 2a befindliche Luft gefördert, so kann das Ventil 16 zunächst verschlossen bleiben und lediglich die Luftpumpe 23 kann mit niedriger Leistung betrieben werden. Es erfolgt dann zunächst ein Abführen der Restluft im Schlauch 2a mit niedriger Ausströmungsgeschwindigkeit aus dem Auslass 3. Sobald der Sensor 6, 7, 10 den Übergang von Luft hin zu geförderter Milch M registriert, kann das Ventil 16 geöffnet werden und die Pumpe 23 kann mit normaler Leistung betrieben werden. Es erfolgt dann ein Ansaugen und Aufschäumen der geförderten Milch M wie vorbeschrieben.

Figur 2a skizziert eine erste Bauform 6 des erfindungsgemäßen Sensors (angedeutet ist ein Querschnitt durch den Schlauch 2a bzw. den ersten Teilabschnitt 2a des Förderkanals 2; identische Elemente wie in Figur 1 sind mit denselben Bezugszeichen versehen).

Der Sensor 6 ist hier als elektromechanischer Sensor in Form eines piezoelektrischen Sensors ausgebildet, der an einer winkelförmigen Halterung 18 befestigt ist. (Alternativ dazu - hier nicht gezeigt - kann auch eine Wägezelle mit einem Dehnungsmessstreifen eingesetzt werden.) Die Befestigung des Sensors 6 ist dabei so realisiert, dass von der Halterung 18 und vom Sensor 6 ein an drei Seiten umschlossener Raumabschnitt ausgebildet wird, in dem der hier als flexibler Schlauch 5 ausgebildete erste Teilabschnitt 2a des Förderkanals 2 abschnittsweise zwischen einer Wandung der Halterung 18 und dem Sensor 6 eingeklemmt ist.

Beim Transport von Flüssigkeit bzw. Milch durch den flexiblen Schlauch 5 mittels Unterdruck (Venturiprinzip) ändert sich der Schlauchinnendruck in dem Moment, in dem nicht mehr Flüssigkeit M, sondern - nach Leersaugen des Gefäßes G - Gas, insbesondere Luft in den Schlauch 5 gelangt. Gleiches gilt im umgekehrten Fall, also wenn Flüssigkeit M einem Luftstrom beigemischt wird. Es ergibt sich somit beim Übergang von Flüssigkeit M zu Gas/Luft und umgekehrt jeweils eine Druckänderung im bzw. am Schlauch: Wird Flüssigkeit M angesaugt, so ergibt sich aufgrund des Venturiprinzips ein stärkerer Unterdruck beim Ansaugen, als beim Ansaugen von Gas/Luft. Beim Ansaugen von Milch M zieht sich der Schlauch somit stärker zusammen, als beim Ansaugen von Gas/Luft, da Milch schwerer ist, als Luft (und somit mit höherem Unterdruck gesaugt werden muss, damit die Milch gefördert werden kann). Diese Druckänderungen bei den Übergängen bewirken, dass sich die Außenabmessungen des flexiblen Schlauchs 5 durch Dehnen bzw. durch Zusammenziehen verändern. Diese Veränderungen werden dann über den piezoelektrischen Sensor 6 detektiert. (Taktiles Detektieren der Maßänderungen am Schlauch 5 mittels des elektromechanischen Sensors oder der hier nicht gezeigten Wägezelle.)

Das Sensorsignal 4d kann wie vorbeschrieben ausgewertet werden, um festzustellen, ob gerade Gas bzw. Luft, Milch M oder ein Gemisch aus beidem durch den Schlauch gefördert wird. Auf Basis des Ergebnisses der Auswertung können die Elemente 16, 17, 21, 22 und 23 geeignet angesteuert werden.

Im in Fig. 2a gezeigten Fall ist der Schlauch 5 unmittelbar zwischen Wandung der Halterung 18 und Sensor 6 eingeklemmt. Alternativ dazu ist es jedoch auch möglich, einen Aktuator vorzusehen. Der Schlauch ist dann zwischen Aktuator und Wandung der Halterung 18 eingeklemmt. Der Aktuator steht dabei in Verbindung mit dem Sensor und überträgt die Schlauchverformung bzw. das entsprechende Messsignal an letzteren.

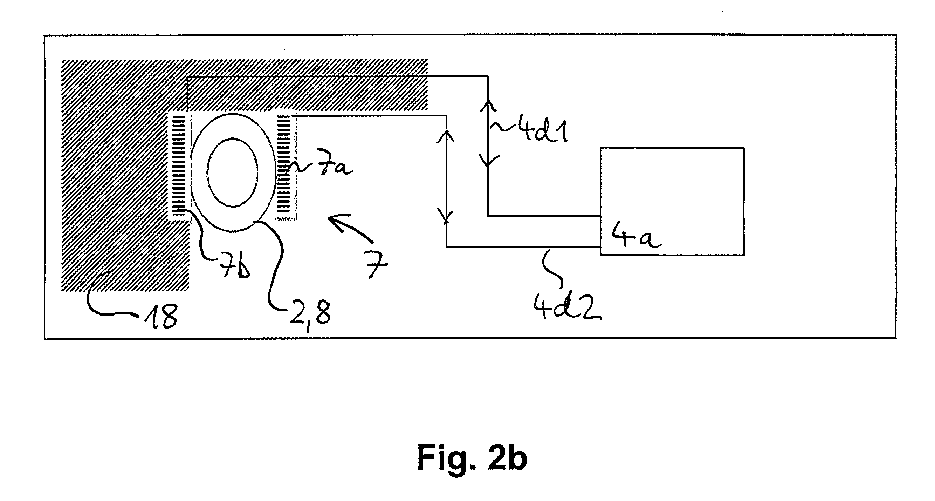

Ein weiteres erfindungsgemäßes Ausführungsbeispiel des Sensors zeigt Figur 2b. Identische Bauelemente wie in den Figuren 1 und 2a sind mit denselben Bezugszeichen versehen und werden daher nicht näher beschrieben.

Im gezeigten Fall ist der Sensor der Detektionseinheit 4 als kapazitiver Sensor 7 mit zwei Elektroden 7a, 7b ausgebildet, die so an der Halterung 18 befestigt sind, dass ein Abschnitt 8 des hier nicht notwendigerweise flexiblen Schlauches 2 bzw. des ersten Teilabschnitts 2a zwischen die Elektroden 7a und 7b einschiebbar ist. Die Befestigung des Schlauchs zwischen den Elektroden geschieht hier durch Einklemmen, es sind jedoch auch andere Befestigungsmittel denkbar. Die beiden Elektroden stehen über zwei separate Signalleitungen 4d1 und 4d2 mit dem Mikrocontroller 4a in Verbindung. Die Elektroden sind im vorliegenden Fall (nicht im Detail gezeigt) stiftförmig ausgebildet. Es sind jedoch auch plattenförmige Elektroden denkbar.

Da ein Schlauchabschnitt 8 des ersten Teilabschnitts 2a zwischen den beiden Elektroden 7a, 7b durchgeführt ist, kann über die gezeigte Anordnung die Kapazität des Schlauchabschnitts 8 ausgewertet werden. Das Messprinzip eines kapazitiven Sensors 7 ist dem Fachmann dabei an sich bekannt.

Der Mikrocontroller 4a wertet somit Kapazitätsänderungen am Schlauchabschnitt 8 aus, die durch den Wechsel des Durchströmungsmediums (Milch M, Gas/Luft oder ein Gemisch aus beidem) bewirkt werden. Dabei kann z.B. mittels vorab im Speicher 4b, 4c abgelegten Kalibriersignalen festgestellt werden, welche Art von Medium bzw. Fluid gerade durch den Schlauchabschnitt 8 fließt. Zudem kann nicht nur der aktuelle Füllzustand des Schlauchs 8, sondern auch die Präsenz eines Schlauchs 8 überhaupt festgestellt werden. (So kann beispielsweise über den akustischen Signalgeber 17 ein Warnsignal ausgegeben werden, wenn der Schlauch 8 aus seiner Lage zwischen den beiden Elektroden 7a, 7b herausgerutscht ist.)

Aufgrund der sehr unterschiedlichen Dielektrizitätskonstanten von Flüssigkeit einerseits und Gas/Luft andererseits lässt sich ein entsprechender Übergang mit hoher Genauigkeit erfassen.

Die Kapazität des Schlauchabschnitts 8 kann über den Mikrocontroller 4a direkt oder indirekt mittels Vorverstärker/Auswerter ausgewertet werden.

Bei dem in Fig. 2b gezeigten Fall müssen sich die beiden Elektroden 7a, 7b jedoch nicht gegenüberliegen, sondern können (hier nicht gezeigt) auch auf ein und derselben Seite des Sensors nebeneinanderliegend ausgebildet sein.

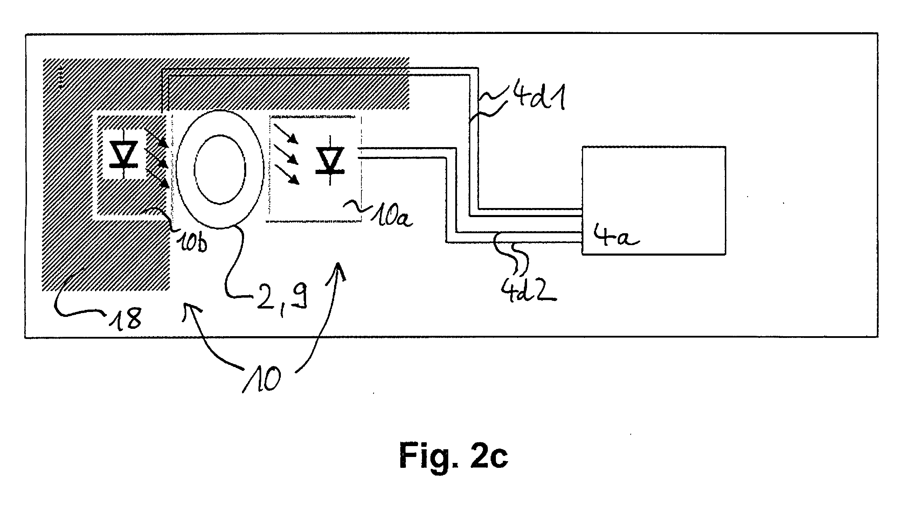

Figur 2c zeigt ein weiteres Ausführungsbeispiel der Detektionseinheit 4 bzw. deren Sensors. Der Aufbau ist hier grundsätzlich derselbe wie in den Figuren 2a und 2b gezeigt, sodass auch hier identische Bauelemente mit identischen Bezugszeichen versehen sind und nicht näher beschrieben werden.

Der Sensor 10 aus Figur 2c ist als optischer Sensor 10 in Form einer Durchlichtschranke ausgebildet. Hierzu sind an der Halterung 18 eine Leuchtdiode 10b zum Emittieren von Licht und eine Photodiode 10a zum Erfassen des transmittierten Lichts (siehe nachfolgend) so befestigt, dass ein Teil des hier als transparenter Schlauch 9 ausgebildeten ersten Teilabschnitts 2a des Förderkanals 2 zwischen Leuchtdiode 10b und Photodiode 10a eingeklemmt ist. Die Leuchtdiode 10b wird durch den Mikrocontroller 4a über zwei Signalleitungen 4d1 angesteuert. Die von der Photodiode 10a erfassten Transmissionssignale werden über zwei Datenleitungen 4d2 an den Mikrocontroller 4a übermittelt.

Über die gezeigte optische Sensoranordnung 10a, 10b kann somit die Transmission von Licht durch den transparenten Schlauch 9 erfasst werden. Beim Wechsel des Förderns von Milch M hin zum Fördern von Gas/Luft aus dem Gefäß G ändert sich die vom Sensor 10 erfasste Transmission sprunghaft, sodass wie vorbeschrieben die Änderung des Strömungszustands im ersten Teilabschnitt 2a detektiert werden kann. Der Mikrocontroller 4a wertet somit (direkt oder indirekt mittels Vorverstärker/Auswerter) die Transmission des Schlauchabschnitts 9 aus.

Auch hierbei kann nicht nur der aktuelle Füll- und/oder Strömungszustand im Schlauch erfasst werden, sondern auch die Präsenz des Schlauches an sich. Ebenso ist ein Erfassen des Verschmutzungsgrades des Schlauches möglich (insbesondere, wenn der Schlauch 9 nicht vollständig transparent, sondern teiltransparent ist).

Statt der gezeigten Durchlichtschranke 10 kann auch eine Gabellichtschranke eingesetzt werden, durch die der Schlauch 9 hindurchgeführt wird bzw. zwischen deren Bauteile der Schlauch eingeklemmt wird.

Im gezeigten Fall arbeiten Leuchtdiode 10b und Photodiode 10a im sichtbaren Bereich. Alternativ dazu ist jedoch auch der Einsatz von Infrarotlicht (IR-Lichtschranke) möglich, unter anderem um Fremdlichteinflüsse auszuschließen.

Selbstverständlich können als optische Sensoren 10 auch Reflex-Lichtschranken eingesetzt werden, es werden dann die Unterschiede in der Lichtreflexion zwischen leerem (d.h. nur gasgefülltem) Schlauch und mit Flüssigkeit M gefülltem Schlauch ausgewertet.

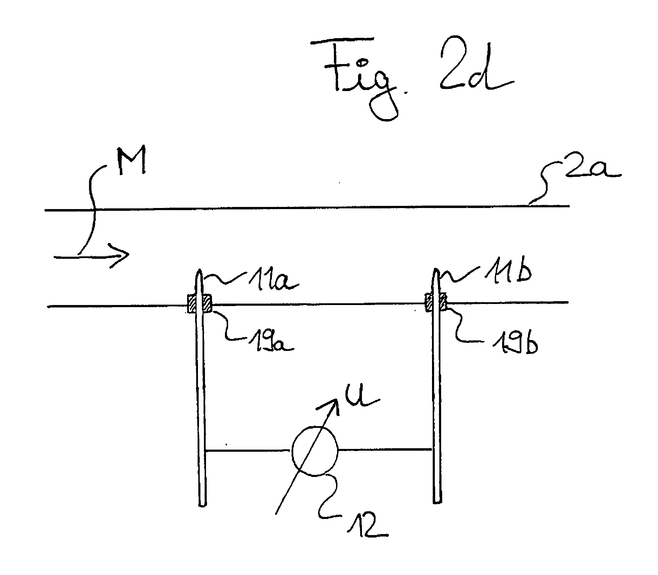

Figur 2d zeigt ein weiteres Ausführungsbeispiel für einen im Bereich des ersten Teilabschnitts 2a realisierbaren Sensors. Im Gegensatz zu den in den Figuren 2a bis 2c gezeigten Sensoren 6, 7, 10 arbeitet dieser Sensor nicht berührungsfrei, d.h. Bauteile des Sensors berühren zumindest abschnittsweise das im Förderkanal 2 strömende Fluid.

Der in Figur 2d gezeigte Sensor der Detektionseinheit 4 umfasst zwei einzelne Elektroden 11a, 11b, deren Spitzen in definiertem Abstand in Strömungsrichtung gesehen hintereinander im Inneren des Teilabschnitts 2a des Förderkanals 2 angeordnet sind. Hierzu sind Dichtungen 19a, 19b in der Wandung des Förderkanals 2 vorgesehen, durch die die Spitzen der Elektroden 11a, 11b in das Innere des Förderkanals 2 eingeführt sind.

Des Weiteren ist eine Spannungsquelle 12 vorgesehen, mit der eine vordefinierte Spannung U an die beiden Elektroden 11a, 11b angelegt werden kann.

Der zwischen den beiden Elektroden 11a, 11b nach Anlegen der Spannung U fließende elektrische Strom hängt nun vom aktuell im Innern des Kanals befindlichen Medium bzw. dessen elektrischer Leitfähigkeit ab (ist Flüssigkeit bzw. Milch M im Kanal, so steigt die elektrische Leitfähigkeit). Somit ergibt sich beim Übergang von Milch M zu Gas/Luft im Kanal 2 eine sprunghafte Signaländerung für den nach Anlegen der Spannung fließenden elektrischen Strom. Anhand dieses Signalsprungs kann somit ein Übergang von Milch M zu Gas/Luft (oder umgekehrt) erfasst werden.

## Patentansprüche

1. Vorrichtung zum Zubereiten eines Milch (M) enthaltenden Getränkes, insbesondere elektrisch betriebene Kaffeemaschine oder Kaffeevollautomat zum Zubereiten eines Milch (M) enthaltenden Kaffeegetränkes, mit
einer zum Fördern und Ausleiten der Milch (M) ausgebildeten Fördereinrichtung (1), die einen Förderkanal (2) zur Milchförderung und einen milchstromabwärts des Förderkanals (2) ausgebildeten Auslass (3) zum Ausleiten der Milch (M) in ein bevorzugt externes Sammelgefäß (S) umfasst,
***gekennzeichnet durch***
eine mit einem im und/oder am Förderkanal (2) ausgebildeten Sensor (6, 7, 10) versehene Detektionseinheit (4), mit der eine Änderung des Füll- und/oder Strömungszustands im Förderkanal (2) erfassbar ist, insbesondere ein Übergang vom Fördern von Milch (M) hin zum Fördern von Dampf (D) und/oder Luft (L) und/oder ein mindestens eine vorbestimmte Zeit andauerndes Fördern von Dampf (D) und/oder Luft (L) erfassbar ist.

2. Vorrichtung nach dem vorhergehenden Anspruch,
***dadurch gekennzeichnet, dass***
die Änderung des Füll- und/oder Strömungszustands durch die Detektionseinheit (4) berührungslos erfassbar ist, d. h. ohne Kontakt zur Milch (M) und/oder ohne Eingriff ins Innere des Förderkanals (2) erfassbar ist.

3. Vorrichtung nach einem der vorhergehenden Ansprüche,
***dadurch gekennzeichnet, dass***
der Förderkanal (2) einen flexiblen Abschnitt (5) umfasst, insbesondere als flexibler Schlauch (5) ausgebildet ist, und
dass die Detektionseinheit (4) einen Sensor (6), insbesondere einen elektromechanischen Sensor beispielsweise in Form eines piezoelektrischen Sensors, einen Hall-Sensor oder eine Wägezelle, umfasst, der so positioniert ist, dass mit ihm eine Lage-, Ausdehnungs-, Druck- und/oder Formänderung des/am flexiblen Abschnitt(s) (5) messbar ist zum Erfassen der Änderung des Füll- und/oder Strömungszustands im Förderkanal (2).

4. Vorrichtung nach einem der vorhergehenden Ansprüche,
***dadurch gekennzeichnet, dass***
die Detektionseinheit (4) einen kapazitiven Sensor (7), insbesondere einen mindestens zwei Elektroden (7a, 7b), zwischen denen ein Abschnitt (8) des Förderkanals (2) angeordnet ist, umfassenden kapazitiven Sensor (7), aufweist, der so positioniert ist, dass mit ihm eine Änderung der Kapazität des Förderkanals (2) und/oder Abschnitts (8) messbar ist zum Erfassen der Änderung des Füll- und/oder Strömungszustands im Förderkanal (2).

5. Vorrichtung nach einem der vorhergehenden Ansprüche,
***dadurch gekennzeichnet, dass***
der Förderkanal (2) einen zumindest teilweise transparenten Abschnitt (9) umfasst, insbesondere als zumindest teilweise transparenter Schlauch (9) ausgebildet ist, und
dass die Detektionseinheit (4) einen optischen Sensor (10) umfasst, der so positioniert ist, dass mit ihm die Transmission, die Streuung und/oder die Reflexion von Licht durch den, innerhalb des und/oder an dem zumindest teilweise transparenten Abschnitt(s) (9) messbar ist/sind zum Erfassen der Änderung des Füll- und/oder Strömungszustands im Förderkanal (2).

6. Vorrichtung nach dem vorhergehenden Anspruch, ***dadurch gekennzeichnet, dass***
der optische Sensor (10)
• eine Durchlichtschranke, eine Gabellichtschranke oder eine Reflexlichtschranke ist,
• zum Emittieren von Licht eine LED (10b) und zum Nachweis von transmittiertem, reflektiertem und/oder gestreuten Licht eine Photodiode (10a) aufweist
und/oder
• zur Minimierung von Fremdlichteinflüssen mit Infrarotlicht arbeitet.

7. Vorrichtung nach einem der vorhergehenden Ansprüche mit Ausnahme von Anspruch 2,
***dadurch gekennzeichnet, dass***
die Detektionseinheit (4) zwei zumindest abschnittsweise in das Innere des Förderkanals (2) ragende Elektroden (11a, 11b) umfasst, an die eine elektrische Spannung anlegbar (12) ist, und dass der zwischen den beiden Elektroden (11a, 11b) nach Anlegen der Spannung fließende elektrische Strom messbar ist zum Erfassen der Änderung des Füll- und/oder Strömungszustands im Förderkanal (2).

8. Vorrichtung nach einem der vorhergehenden Ansprüche,
***dadurch gekennzeichnet, dass***
das Fördern eines Fluids durch den Förderkanal (2), insbesondere das Ansaugen eines Fluids mittels des Förderkanals (2), abschaltbar ist, wenn mittels der Detektionseinheit (4) die Änderung des Füll- und/oder Strömungszustands im Förderkanal (2) erfasst wird, insbesondere der Übergang vom Fördern von Milch (M) zum Fördern von Dampf (D) und/oder Luft (L) und/oder das mindestens die vorbestimmte Zeit andauernde Fördern von Dampf (D) und/oder Luft (L) erfasst wird.

9. Vorrichtung nach einem der vorhergehenden Ansprüche,
***dadurch gekennzeichnet, dass***
die Fördereinrichtung (1) einen bevorzugt in den Förderkanal (2) integrierten oder einen bevorzugt zwischen zwei Teilabschnitte (2a, 2b) des Förderkanals geschalteten Mischbereich (14) zum Aufschäumen der Milch (M) mit heißem Dampf (D) und eine in den Mischbereich (14) einmündende Dampfzuleitung (15) zur Zufuhr des heißen Dampfes (D) aufweist, und
dass die Zufuhr von heißem Dampf (D) in den Mischbereich (14) abschaltbar ist, insbesondere durch Schließen einer in und/oder an der Dampfzuleitung (15) ausgebildeten Verschlusseinheit (16), insbesondere eines Ventils, wenn mittels der Detektionseinheit (4) die Änderung des Füll- und/oder Strömungszustands im Förderkanal (2) erfasst wird, insbesondere der Übergang vom Fördern von Milch (M) zum Fördern von Dampf (D) und/oder Luft (L) und/oder das mindestens die vorbestimmte Zeit andauernde Fördern Dampf (D) und/oder Luft (L) erfasst wird.

10. Vorrichtung nach einem der vorhergehenden Ansprüche,
***dadurch gekennzeichnet, dass***
ein Signalgeber, bevorzugt ein akustischer, optischer und/oder haptischer Signalgeber (17), vorgesehen ist, der aktivierbar ist, wenn mittels der Detektionseinheit (4) die Änderung des Füll- und/oder Strömungszustands im Förderkanal (2) erfasst wird, insbesondere der Übergang vom Fördern von Milch (M) zum Fördern von Dampf (D) und/oder Luft (L) und/oder das mindestens die vorbestimmte Zeit andauernde Fördern von Dampf (D) und/oder Luft (L) erfasst wird.

11. Vorrichtung nach einem der vorhergehenden Ansprüche,
***dadurch gekennzeichnet, dass***
die Fördervorrichtung (1) zum Zuleiten und/oder Ansaugen, insbesondere zum Ansaugen mittels des Venturiprinzips (20), von Milch (M) aus einem bevorzugt externen Milchgefäß (G) in den und/oder mittels des Förderkanal(s) (2) ausgebildet ist.

12. Vorrichtung nach einem der vorhergehenden Ansprüche,
***dadurch gekennzeichnet, dass***
der Sensor (6, 7, 10) am Förderkanal (2) befestigt ist, beispielsweise mit Spannbändern befestigt ist,
oder
dass zumindest ein Abschnitt des Förderkanals (2) in den Sensor (6, 7, 10) und/oder zwischen Teile desselben einklemmbar ist oder eingeklemmt ist und/oder zwischen dem Sensor (6, 7, 10) und einem Gegenstück (18), insbesondere einem Wandabschnitt des Gehäuses der Vorrichtung oder einer zum Halten des Sensors (6, 7, 10) und/oder des Förderkanals (2) ausgebildeten Halterung, einklemmbar ist oder eingeklemmt ist.

13. Verfahren zum Zubereiten eines Milch (M) enthaltenden Getränkes mit einer Vorrichtung gemäß einem der vorhergehenden Ansprüche, insbesondere Verfahren zum Zubereiten eines Milch (M) enthaltenden Kaffeegetränkes mit einer elektrisch betriebenen Kaffeemaschine oder mit einem Kaffeevollautomaten,
wobei mit einer zum Fördern und Ausleiten der Milch (M) ausgebildeten Fördereinrichtung (1), die einen Förderkanal (2) zur Milchförderung und einen milchstromabwärts des Förderkanals (2) ausgebildeten Auslass (3) zum Ausleiten der Milch (M) in ein bevorzugt externes Sammelgefäß (S) umfasst, Milch gefördert wird, und
wobei mit einer mit einem im und/oder am Förderkanal (2) ausgebildeten Sensor (6, 7, 10) versehene Detektionseinheit (4) eine Änderung des Füll- und/oder Strömungszustands der Milch (M) im Förderkanal (2) erfasst wird.

## Claims

1. Device for preparing a beverage containing milk (M), in particular an electrically operated coffee machine or fully automatic coffee machine to prepare a coffee beverage containing milk (M), having
a conveying device (1) formed to convey and channel the milk (M), which comprises a conveying channel (2) to convey milk and an outlet (3) formed downstream of the milk flow of the conveying channel (2) to channel the milk (M) into a preferably external collecting vessel (S),
**characterised by**
a detection unit (4) provided with a sensing element (6, 7, 10) formed in and/or on the conveying channel (2), with which a change of the filling and/or flow condition in the conveying channel (2) can be detected, in particular a transition from the conveyance of milk (M) to the conveyance of steam (D) and/or air (L) and/or a conveyance of steam (D) and/or air (L) lasting for at least a predetermined time, can be detected.

2. Device according to the preceding claim,
**characterised in that**,
the change of the filling and/or flow condition can be detected by the detection unit (4) without any contact, i.e. can be detected without touching the milk (M) and/or without entering the interior of the conveying channel (2).

3. Device according to one of the preceding claims,
**characterised in that**,
the conveying channel (2) comprises a flexible section (5), in particular is formed as a flexible tube (5), and the detection unit (4) comprises a sensing element (6), in particular an electromechanical sensing element, for example in the form of a piezoelectrical sensing element, a Hall effect sensor or a load cell, which is positioned in such a way that a change in position, expanse, pressure and/or form of/on the adjustable section(s) (5) can be measured with it to detect the change in the filling and/or flow condition in the conveying channel (2).

4. Device according to one of the preceding claims,
**characterised in that**,
the detection unit (4) has a capacitive sensing element (7), in particular a capacitive sensing element (7) comprising at least two electrodes (7a, 7b), between which a section (8) of the conveying channel (2) is arranged, which is positioned in such a way that a change in the capacity of the conveying channel (2) and/or the section (8) can be measured with it to detect the change in the filling and/or flow condition in the conveying channel (2).

5. Device according to one of the preceding claims,
**characterised in that**,
the conveying channel (2) comprises an at least partially transparent section (9), in particular is formed as an at least partially transparent tube (9), and
the detection unit (4) comprises an optical sensing element (10), which is positioned in such a way that the transmittance, the scattering and/or the reflection of light through, within and/or onto the at least partially transparent section(s) (9) can be measured with it to detect the change of the filling and/or flow condition in the conveying channel (2).

6. Device according the preceding claim,
**characterised in that**,
the optical sensing element (10)
• is a barrier for transmitted light, for hybrid light or for reflected light,
• has an LED (10b) to emit light and a photodiode (10a) to detect transmitted, reflected and/or scattered light
and/or
• works to minimise extraneous light influences with infrared light.

7. Device according to one of the preceding claims with the exception of claim 2,
**characterised in that**,
the detection unit (4) comprises two electrodes (11a, 11b) protruding at least in sections into the interior of the conveying channel (2), to which an electrical voltage (12) can be applied, and
the electrical current flowing between both electrodes (11a, 11b) can be measured after applying the current to detect the change in the filling and/or flow condition in the conveying channel (2).

8. Device according to one of the preceding claims,
**characterised in that**,
conveying a fluid through the conveying channel (2), in particular the suction of a fluid by means of the conveying channel (2), can be deactivated if the change in the filling and/or flow condition in the conveying channel (2) is detected by means of the detection unit (4), in particular the transition from the conveyance of milk (M) to the conveyance of steam (D) and/or air (L) and/or the conveyance of steam (D) and/or air (L) lasting for at least the predetermined time, is detected.

9. Device according to one of the preceding claims,
**characterised in that**,
the conveying device (1) has a mixing region (14) which is preferably integrated into the conveying channel (2) or is preferably placed between two sectors (2a, 2b) of the conveying channel to froth the milk (M) with hot steam (D) and a steam supply tube (15) flowing into the mixing region (14) to supply the hot steam (D), and
the supply of hot steam (D) into the mixing region (14) can be deactivated, in particular by closing a sealing unit (16) formed in and/or on the steam supply tube (15), in particular a valve, if the change in the filling and/or flow condition in the conveying channel (2) is detected by means of the detection unit (4), in particular the transition from the conveyance of milk (M) to the conveyance of steam (D) and/or air (L) and/or the conveyance of steam (D) and/or air (L) lasting for at least the predetermined time, is detected.

10. Device according to one of the preceding claims,
**characterised in that**,
a signal generator is provided, preferably an acoustic, optical and/or haptic signal generator (17), which can be activated if the change in filling and/or flow condition in the conveying channel (2) is detected by means of the detection unit (4), in particular the transition from the conveyance of milk (M) to the conveyance of steam (D) and/or air (L) and/or the conveyance of steam (D) and/or air (L) lasting for at least the predetermined time, is detected.

11. Device according to one of the preceding claims,
**characterised in that**,
the conveying device (1) is formed for the supply and/or suction, in particular for suction by means of the Venturi principle (20), of milk (M) from a preferably external milk container (G) to and/or by means of the conveying channel (s) (2).

12. Device according to one of the preceding claims,
**characterised in that**,
the sensing element (6, 7, 10) is attached to the conveying channel (2), for example is attached with tension bands,
or
at least one section of the conveying channel (2) can be clamped or is clamped into the sensing element (6, 7, 10) and/or between parts of this and/or between the sensing element (6, 7, 10) and a counterpiece (18), in particular can be clamped or is clamped to a wall section of the housing of the device or to a bracket formed to mount the sensing element (6, 7, 10) and/or the conveying channel (2).

13. Method for the preparation of a beverage containing milk (M) with a device according to one of the preceding claims, in particular method for the preparation of a coffee beverage containing milk (M) with an electrically operating coffee machine or with a fully automatic coffee machine,
wherein milk is supplied by a conveying device (1) formed to convey and channel the milk (M), which comprises a conveying channel (2) to convey milk and an output (3) formed downstream of the milk flow of the conveying channel (2) to channel the milk (M) into a preferably external collecting vessel (S), and
wherein a change in the filling and/or flow condition of the milk (M) in the conveying channel (2) is detected by a detection unit (4) provided with a sensing element (6, 7, 10) formed in and/or on the conveying channel (2).

## Revendications

1. Dispositif destiné à la préparation d'une boisson contenant du lait (M), en particulier machine à café électrique ou machine à café entièrement automatique destinée à la préparation d'une boisson au café contenant du lait (M), ayant
un dispositif de transport (1) conçu pour le transport et l'éjection du lait (M) qui comprend une conduite de transport (2) pour le transport du lait et une sortie (3) réalisée en aval du flux de lait de la conduite de transport (2) pour l'éjection du lait (M) dans un récipient collecteur (S) de préférence externe,
**caractérisé par**
une unité de détection (4) pourvue d'un capteur (6, 7, 10) réalisé dans et/ou sur la conduite de transport (2), avec laquelle un changement de l'état de remplissage et/ou de circulation dans la conduite de transport (2) peut être détecté, et en particulier, un passage du transport de lait (M) au transport de vapeur (D) et/ou d'air (L) et/ou un transport de vapeur (D) et/ou d'air (L) se prolongeant au moins pendant une durée prédéterminée peut être détecté.

2. Dispositif selon la revendication précédente,
**caractérisé**
**en ce que** le changement de l'état de remplissage et/ou de circulation peut être détecté sans contact par l'unité de détection (4), c'est-à-dire sans contact avec le lait (M) et/ou sans pénétration à l'intérieur de la conduite de transport (2).

3. Dispositif selon l'une des revendications précédentes,
**caractérisé**
**en ce que** la conduite de transport (2) comprend une section flexible (5), et en particulier, elle est réalisée comme tuyau flexible (5), et
**en ce que** l'unité de détection (4) comprend un capteur (6), en particulier un capteur électromécanique, par exemple sous la forme d'un capteur piézoélectrique, d'un capteur à effet Hall ou d'une cellule de pesée, qui est positionné de telle sorte qu'il permet de mesurer un changement de position, d'extension, de pression et/ou de forme de/sur la section flexible (5) de façon à détecter le changement de l'état de remplissage et/ou de circulation dans la conduite de transport (2).

4. Dispositif selon l'une des revendications précédentes,
**caractérisé**
**en ce que** l'unité de détection (4) présente un capteur capacitif (7), en particulier un capteur capacitif (7) comprenant au moins deux électrodes (7a, 7b) entre lesquelles une section (8) de la conduite de transport (2) est agencée, qui est positionné de telle sorte qu'il permet de mesurer un changement de la capacité de la conduite de transport (2) et/ou de la section (8) de façon à détecter le changement de l'état de remplissage et/ou de circulation dans la conduite de transport (2).

5. Dispositif selon l'une des revendications précédentes,
**caractérisé**
**en ce que** la conduite de transport (2) comprend une section (9) au moins en partie transparente, et en particulier, elle est réalisée comme tuyau (9) au moins en partie transparent, et
**en ce que** l'unité de détection (4) comprend un capteur optique (10) qui est positionné de telle sorte qu'il permet de mesurer la transmission, la diffusion et/ou la réflexion de lumière au travers de, à l'intérieur de et/ou sur la section (9) au moins en partie transparente de façon à détecter le changement de l'état de remplissage et/ou de circulation dans la conduite de transport (2).

6. Dispositif selon l'une des revendications précédentes,
**caractérisé**
**en ce que** le capteur optique (10)
• est une barrière photoélectrique à lumière traversante, une barrière photoélectrique à fourche ou une barrière photoélectrique à réflexion,
• présente une LED (10b) destinée à émettre de la lumière et une photodiode (10a) destinée à prouver la lumière transmise, réfléchie et/ou diffusée,
et/ou
• utilise une lumière infrarouge afin de minimiser l'influence de la lumière extérieure.

7. Dispositif selon l'une des revendications précédentes excepté la revendication 2, **caractérisé**
**en ce que** l'unité de détection (4) comprend deux électrodes (11a, 11b) s'étendant au moins sur une section à l'intérieur de la conduite de transport (2) auxquelles une tension électrique peut être appliquée (12), et
**en ce que** le courant électrique circulant entre les deux électrodes (11a, 11 b) après l'application de la tension peut être mesuré de façon à détecter le changement de l'état de remplissage et/ou de circulation dans la conduite de transport (2).

8. Dispositif selon l'une des revendications précédentes,
**caractérisé**
**en ce que** le transport d'un fluide par la conduite de transport (2), et en particulier l'aspiration d'un fluide au moyen de la conduite de transport (2), peut être désactivé lorsque le changement de l'état de remplissage et/ou de circulation dans la conduite de transport (2) est détecté au moyen de l'unité de détection (4), et en particulier, lorsque le passage du transport de lait (M) au transport de vapeur (D) et/ou d'air (L) et/ou le transport de vapeur (D) et/ou d'air (L) se prolongeant au moins pendant la durée prédéterminée est détecté.

9. Dispositif selon l'une des revendications précédentes,
**caractérisé**
**en ce que** le dispositif de transport (1) présente une zone de mélange (14) de préférence intégrée dans la conduite de transport (2) ou de préférence montée entre deux sections partielles (2a, 2b) de la conduite de transport destinée à faire mousser le lait (M) avec de la vapeur (D) chaude et une conduite d'alimentation de vapeur (15) débouchant dans la zone de mélange (14) destinée à amener la vapeur (D) chaude, et
**en ce que** l'amenée de vapeur (D) chaude dans la zone de mélange (14) peut être désactivée, en particulier en fermant une unité de fermeture (16) réalisée dans et/ou sur la conduite d'alimentation de vapeur (15), en particulier une vanne, lorsque le changement de l'état de remplissage et/ou de circulation dans la conduite de transport (2) est détecté au moyen de l'unité de détection (4), et en particulier, lorsque le passage du transport de lait (M) au transport de vapeur (D) et/ou d'air (L) et/ou le transport de vapeur (D) et/ou d'air (L) se prolongeant au moins pendant la durée prédéterminée est détecté.

10. Dispositif selon l'une des revendications précédentes,
**caractérisé**
**en ce qu'**il est prévu un émetteur de signal, de préférence un émetteur de signal acoustique, optique et/ou tactile (17), qui peut être activé lorsque le changement de
l'état de remplissage et/ou de circulation dans la conduite de transport (2) est détecté au moyen de l'unité de détection (4), et en particulier, lorsque le passage du transport de lait (M) au transport de vapeur (D) et/ou d'air (L) et/ou le transport de vapeur (D) et/ou d'air (L) se prolongeant au moins pendant la durée prédéterminée est détecté.

11. Dispositif selon l'une des revendications précédentes,
**caractérisé**
**en ce que** le dispositif de transport (1) est réalisé pour l'amenée et/ou l'aspiration, en particulier pour l'aspiration au moyen du principe de Venturi (20), de lait (M) à partir d'un récipient de lait (G) de préférence externe dans et/ou au moyen de la conduite de transport (2).

12. Dispositif selon l'une des revendications précédentes,
**caractérisé**
**en ce que** le capteur (6, 7, 10) est fixé sur la conduite de transport (2), par exemple avec des bandes de serrage,
ou
en en ce qu'au moins une section de la conduite de transport (2) peut être ou est coincée dans le capteur (6, 7, 10) et/ou entre des parties de celui-ci et/ou peut être ou est coincée entre le capteur (6, 7, 10) et une pièce complémentaire (18), en particulier une section de paroi du logement du dispositif ou un support prévu pour maintenir le capteur (6, 7, 10) et/ou la conduite de transport (2).

13. Procédé de préparation d'une boisson contenant du lait (M) au moyen d'un dispositif selon l'une des revendications précédentes, en particulier procédé de préparation d'une boisson au café contenant du lait (M) avec une machine à café électrique ou une machine à café entièrement automatique,
dans lequel le lait est transporté avec un dispositif de transport (1) réalisé pour le transport et l'éjection du lait (M) qui comprend une conduite de transport (2) destinée au transport du lait et une sortie (3) réalisée en aval du flux de lait de la conduite de transport (2) pour l'éjection du lait (M) dans un récipient collecteur (S) de préférence externe, et
dans lequel un changement de l'état de remplissage et/ou de circulation du lait (M) dans la conduite de transport (2) est détecté avec une unité de détection (4) pourvue d'un capteur (6, 7, 10) réalisé dans et/ou sur la conduite de transport (2).
